# EUROPEAN PATENT APPLICATION

(11) **EP 4 297 142 A1**
(43) Date of publication of application: **27.12.2023**
(21) Application number: 22179930.7
(22) Date of filing: 20.06.2022
(51) Int. Cl.: H01M 10/0568, H01M 10/058, H01M 10/44, H01M 4/04, H01M 4/58, H01M 4/587, H01M 10/0569, H01M 10/054, H01M 4/02

(54) **METHOD OF FORMING A BATTERY CELL**

(71) Applicant: Altris AB, 753 18 Uppsala (SE)
(72) Inventor: MOGENSEN, Ronnie, Uppsala (SE); BUCKEL, Alexander, Uppsala (SE); YOUNESI, Reza, Uppsala (SE)
(74) Representative: Kransell & Wennborg KB

(57) **Abstract**

The present disclosure, in a first aspect, relates to method of forming a battery cell, the method comprising;
- in a battery cell, the battery cell comprising a carbon containing anode, a sodium containing cathode and an electrolyte solution comprising an alkali-metal bis(oxalato)borate salt, wherein the alkali metal ion is selected from sodium (Na⁺) and potassium (K⁺) and an organic solvent comprising a pyrrolidone and/or a phosphoric acid ester compound,
- performing a first formation cycle by fully charging and discharging the battery cell, and;
- wherein the formation cycle is carried out at a temperature within the range of from >25°C and 100°C. The present disclosure, furthermore, relates to a method of forming the battery cell, the method comprising the steps of;
- performing a first step of charging the battery cell at a C-rate within the range of from 0.5C to 20C, and,
- performing a second step of constant voltage (CV) charging at a voltage above the electrolyte salt decomposition potential for a period of time until a C-rate current range of 0.02C to 4C is reached.

## Description

### Technical field

The present disclosure generally relates to methods of forming a battery cell. More specifically, the present disclosure relates to method of forming a battery cell, the battery cell comprising a carbon containing anode, a sodium containing cathode and an electrolyte solution comprising an alkali-metal bis(oxalato)borate salt.

### Background

Lithium ion-based batteries dominate the market for rechargeable batteries. However, the technology has drawbacks, not at least the relatively scarce resources of lithium. Although better than previous generations of secondary battery technologies, the lithium ion-based batteries are not environmentally friendly, and also costly from a recycling perspective.

Sodium ion batteries represent an attractive alternative to lithium-ion batteries and are arguably the most viable means of supporting renewable energy sources for the purpose of load leveling and storing excess energy.

Substantive research progress has been made in developing electrode materials with high charge storage capacities and rate capability, the success of sodium-ion batteries is hindered by unstable formation of the solid electrolyte interphase (SEI).

The SEI is a layer formed at the anode surface for all alkali metal ion batteries which utilize liquid electrolytes.

Within sodium ion batteries, sodium ions are transferred from a cathode to an anode through an electrolyte during charging and then from the anode to the cathode during discharging. As the battery is cycled, a solid layer builds up at the interface between the electrolyte and the electrodes. This is the SEI layer and is formed mainly from decomposition products of the electrolyte. The SEI layer should ideally act as a passivation layer, preventing more electrolyte decomposition.

The SEI is therefore an essential component in a sodium ion battery for improving cycling stability. However, since the formation of SEI also results in an irreversible loss of capacity, it is important to understand the mechanism and optimize the formation process of the SEI.

Hence, there is an object of the present disclosure to improve the cycling conditions for optimizing the formation process of the SEI.

### Summary

In view of the above-mentioned and other drawbacks of the prior art, it is an object of the present disclosure to provide improvements in relation to the cycling conditions in a battery cell comprising a carbon containing anode, a sodium containing cathode.

This and other objects of the present disclosure may be achieved by a method of forming a battery cell according to claim 1 or according to claim 3. Further embodiments are set out in the dependent claims, in the following description and drawings.

According to a first aspect, the present disclosure relates to a method of forming a battery cell, the battery cell comprising a carbon containing anode, a sodium containing cathode and an electrolyte solution comprising an alkali-metal bis(oxalato)borate salt, wherein the alkali metal ion is selected from sodium (Na⁺) and potassium (K⁺) and an organic solvent comprising a pyrrolidone and/or a phosphoric acid ester compound. The method comprises the steps of;
- performing a first formation cycle by fully charging and in a subsequent step discharging the battery cell wherein the formation cycle is carried out at a temperature within the range of from >25°C and to 100°C.

The SEI is highly important to the battery as it protects the anode by inhibiting the transfer of electrons from the anode to the electrolyte, whilst also allowing sodium ions to transfer from the electrolyte to the anode. Hence, a stable SEI is crucial to achieve good cycling performance. The ideal SEI is therefore both an ionic conductor and an electrical insulator.

In the method of forming a battery cell according to the present disclosure, it has been found by the present inventors that in a battery cell according to the present disclosure and when performing a first formation cycle by fully charging and in a subsequent step discharging the battery cell wherein the formation cycle is carried out at a temperature within the range of from >25°C and 100°C, a surprisingly high discharge capacity and decreased polarization may be achieved, which is associated with the improved SEI formation with higher stability and a more compact SEI. The electrolyte system according to the present disclosure is a low-cost fluorine-free alternative to conventional electrolyte systems, while having good cycling performance, such as the formation of an efficient passivation layer.

The first formation cycle may be carried out at a temperature within the range of from 30°C to 100°C, optionally within the range of from 30°C and 80°C. This has surprisingly been found to provide a consistent long-term high discharge capacity over a multiple of cycles.

According to a second aspect, the present disclosure relates to a method of forming a battery cell, the battery cell comprising a carbon containing anode, a sodium containing cathode and an electrolyte comprising an alkali-metal bis(oxalato)borate salt, wherein the alkali metal ion is selected from sodium (Na⁺) and potassium (K⁺) and an organic solvent comprising a pyrrolidone and/or a phosphoric acid ester compound, the method comprising;
- a first step of charging the battery cell at a C-rate within the range of from 0.5C to 20C, and,
- performing a second step of constant voltage (CV) charging at a voltage above the electrolyte salt decomposition potential for a period of time until a C-rate current range of 0.02C to 4C is reached.

In the method of forming a battery cell according to the second aspect, it was surprisingly found by the inventors that in a battery cell according to the present disclosure when performing a first step of charging the battery cell at a C-rate, i.e. the rate at which a battery is being charged (or discharged), within the range of from 0.5C to 20C, and a second step of constant voltage (CV) charging at a voltage above the electrolyte salt decomposition potential for a period of time until a C-rate current range of 0.02C to 4C is reached, a higher discharge capacity and a higher initial coulombic efficiency was obtained. The surprisingly high discharge capacity and initial coulombic efficiency has been found to be associated with the improved SEI formation provided by the method. If the formed SEI would be insufficient, this would instead result in continuous electrolyte degradation and hence a lower discharge capacity and a lower initial coulombic efficiency and higher polarization.

The electrolyte salt decomposition potential for an electrolyte according to the present disclosure may be found in the article "A Wide-Temperature-Range, Low-Cost, Flourine-Free Battery Electrolyte Based On Sodium Bis(Oxalate)Borate", Chem. Mater. 2021, 33, 4, 1130-1139; https://pubs.acs.org/doi/full/10.1021/acs.chemmater.0c03570#.

The C-rate is a measure of the rate at which a battery cell is being charged or discharged, in this context it related to the rate of charging the battery cell. The C-rate is defined as the current through the battery cell divided by the theoretical current draw under which the battery would deliver its nominal rated capacity in one hour.

Constant voltage (CV) charging herein is means that the current is regulated to reach and maintain a set uniform voltage to the battery cell.

The electrolyte salt decomposition potential refers to the minimum voltage between the anode and the cathode of the battery cell that is needed for electrolysis to occur.

In the method according to the second aspect the second step may be carried out until a C-rate current range of 0.05C to 1C is reached. This has been found to result in a higher discharge capacity and increased initial coulombic efficiency.

In the method according to the second aspect, the C-rate in the first step may be within the range of from 0.5 C to 15 C. This has been found to be beneficial for cycling performance in terms of discharge capacities and coulombic efficiencies.

In the methods of forming a battery cell according to the first and/or second aspect, the concentration of the salt in the electrolyte solution may be within the range of from 0.3 M to 1.5 M, preferably within the range of from 0.3 M to 0.8 M. Such concentration of the salt in the electrolyte solution in the battery cell according to the present invention has been seen by the present inventors to result in good cycling performance forming a stable passivation layer.

In the methods of forming a battery cell according to the first and/or second aspect, the cathode material may be sodium iron(II)-hexacyanoferrate(II) material.

In the methods of forming a battery cell according to the first and/or second aspect, the anode material may be hard carbon.

In the methods of forming a battery cell according to the first and/or second aspect, the sodium iron(II)-hexacyanoferrate(II) material may have the formula Na_{2-y}Fe[Fe(CN)₆]·m H₂O, where y < 0.2 and 0 < m < 2.

In the methods of forming a battery cell according to the first and/or second aspect, the organic solvent may be N-alkyl-2-pyrrolidone having the following structure: 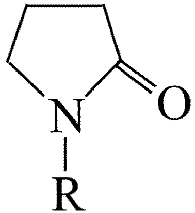 wherein R is selected from an alkyl group comprising 1-8 carbon atoms, preferably 1-4 carbon atoms. Such solvent has an improved ability to dissolve the electrolyte salt.

In the methods of forming a battery cell according to the first and/or second aspect, the organic solvent may be N-methyl-2-pyrrolidone (NMP). Such solvent has an improved ability to dissolve the electrolyte salt.

In the methods of forming a battery cell according to the first and/or second aspect, the organic solvent may be trialkyl phosphate having the following structure: 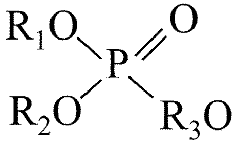 wherein R₁, R₂ and R₃ are independently selected from an alkyl group comprising 1-6 carbon atoms, preferably 1-3 carbon atoms. Such solvent has an improved ability to dissolve the electrolyte salt.

In the methods of forming a battery cell according to the first and/or second aspect, the organic solvent may be trimethyl phosphate (TMP). Such solvent has an improved ability to dissolve the electrolyte salt.

In the methods of forming a battery cell according to the first and/or second aspect, the organic solvent of the electrolyte solution may be triethyl phosphate (TEP), trimethyl phosphate (TMP), N-methyl-pyrrolidone (NMP) or mixtures thereof. Such solvent has an improved ability to dissolve the electrolyte salt.

In the methods of forming a battery cell according to the first and/or second aspect, the organic solvent of the electrolyte solution may comprise a mixture of N-methyl-2-pyrrolidone (NMP) and trimethyl phosphate.

In the methods of forming a battery cell according to the first and/or second aspect, the organic solvent may comprise N-methyl-2-pyrrolidone (NMP) and trimethyl phosphate (TMP) in a range of from 40:60 to 90:10. Such solvent has an advantageous ability to dissolve the electrolyte salt

In the methods of forming a battery cell according to the first and/or second aspect, the concentration of the salt in the electrolyte solution may be from 0.3 to 1.5 M, preferably from 0.4 and 0.8 M, more preferably from 0.5 to 0.6 M. Thereby, providing a fluorine free, low-cost high performance electrolyte solution.

In the methods of forming a battery cell according to the first and/or second aspect, the conductivity of the electrolyte solution may be above 4 mS/cm at a temperature of 23°C.

Further features of, and advantages with, the present invention will become apparent when studying the appended claims and the following description. The skilled person realize that different features of the present invention may be combined to create embodiments other than those described in the following, without departing from the scope of the present invention.

### Brief description of drawings

Some example embodiments will be described with reference to the accompanying figures, in which:
Figure 1 schematically illustrates a battery cell according to the present disclosure;
Figure 2 schematically illustrates a hard carbon particle of the anode material with a SEI layer formed on the surface thereof;
Figure 3 schematically illustrates the method according to the first aspect;
Figure 4 schematically illustrates the method according to the second aspect;
Figure 5 shows bar charts illustrating discharge capacity measured for battery cells according to the present disclosure; and
Figure 6 is a graph illustrating discharge capacity measured for battery cells formed according to the second aspect of the present disclosure and battery cells not being formed.
Figure 7 is a bar chart illustrating the Coulombic efficiency in cycle 1 and cycle 2 and following cycles 3-75 when forming the battery cells according to the second aspect of the present disclosure.

### Detailed description

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

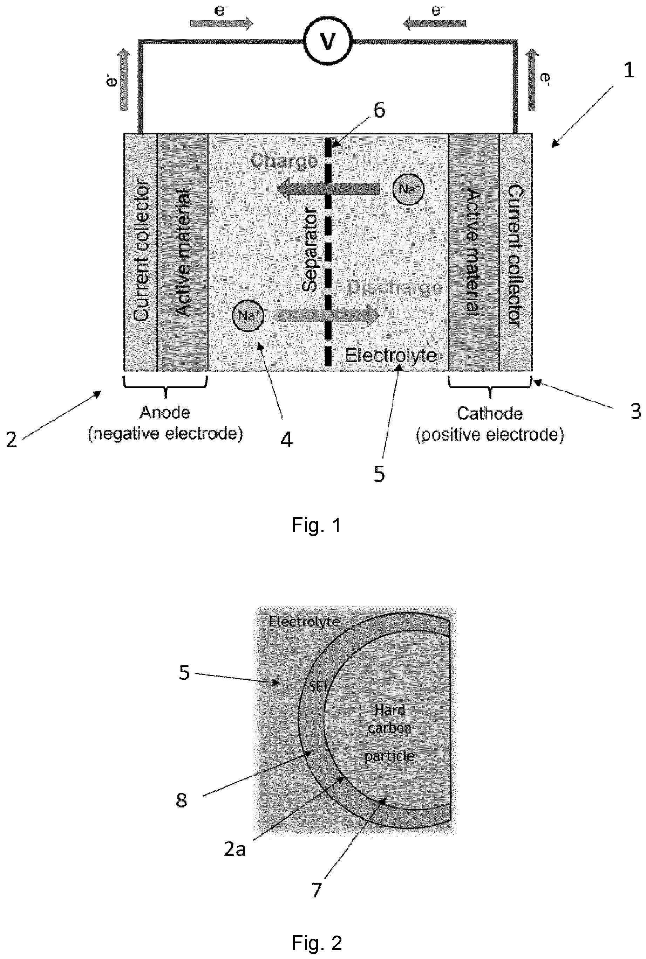

Figure 1 illustrates the schematic principles of a sodium battery 1 comprising a carbon containing anode 2, i.e. negative electrode, and a sodium containing cathode 3, i.e. positive electrode. The sodium containing cathode 3 is a sodium source utilizing sodium ions 4 as charge carriers. The sodium battery 1 stores energy in chemical bonds of the anode 2. Charging the battery 1 forces Na⁺ ions 3 to de-intercalate from the cathode 3 and migrate towards the anode 2. During discharge, the process reverses. Once a circuit is completed, electrons pass back from the carbon containing anode 2 to the sodium containing cathode 3 and the Na⁺ ions 3 travel back to the cathode 3. During discharge of the battery cell 1, as illustrated in figure 1, oxidation takes place at the anode 2, while reduction takes place at the cathode 3. The current flow is determined by the potential difference between the cathode 3 and the anode 2, the battery cell voltage.

The anode and the cathode are separated by an electrolyte solution 5 comprising an alkali-metal bis(oxalato)borate salt, wherein the alkali metal ion is selected from sodium (Na⁺) and potassium (K⁺) and an organic solvent comprising a pyrrolidone and/or a phosphoric acid ester compound. Preferably, the concentration of the salt in the electrolyte solution is within the range of from 0.3 M to 1.5 M, preferably within the range of from 0.3 M to 0.8 M. Preferably, the organic solvent is N-alkyl-2-pyrrolidone having the following structure:

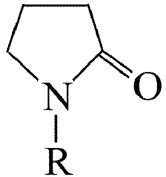

As used herein, the term "battery" means a device comprising one or more electrochemical cells.

In an "electrochemical cell", chemical energy is transformed into electricity by reduction and oxidation (redox) reactions at the electrodes.

"Cycling" herein refers to constant current galvanostatic cycling unless stated differently.

The cathode material is preferably a sodium iron(II)-hexacyanoferrate(II) material, such as a sodium iron(II)-hexacyanoferrate(II) material having the formula Na_{2-y}Fe[Fe(CN)₆]·m H₂O, where y < 0.2 and 0 < m < 2.

The anode is a carbon containing anode, preferably a hard carbon containing anode.

The conductivity paired with the good rate capability of the cathode material allows for fast charging and discharging

The battery cell 1 may further comprise a separator 6 to prevent electrical short circuit between the anode and the cathode, and to provide mechanical stability to the battery cell. The separator material can be any material which is chemically stable and electrically insulating, e.g. polymer films commonly made from polypropylene, polyethylene or combinations of these.

Figure 2 illustrates a hard carbon particle 7 from the anode material 2 (shown in Fig. 1) and the electrolyte solution 5, with a SEI layer 8 formed at the anode surface 2a. As the battery 1 is cycled, a solid layer builds up at the interface between the electrolyte solution 5 and the anode material.

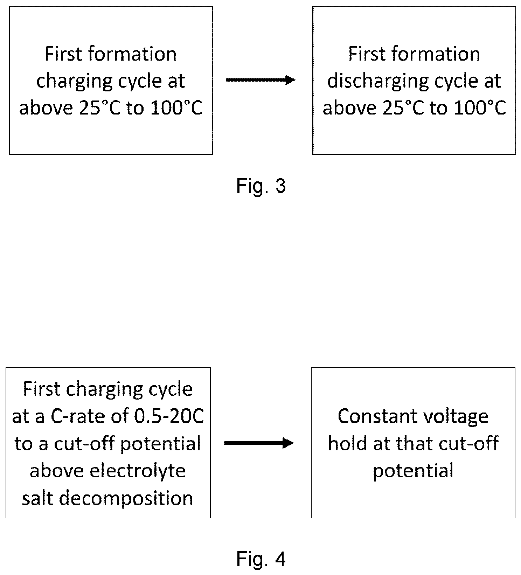

Figure 3 schematically illustrates a method for forming a battery cell 1 according to the first aspect of the disclosure and as illustrated in Figure 1. The battery cell comprises a carbon containing anode, a sodium containing cathode and an electrolyte solution comprising an alkali-metal bis(oxalato)borate salt, wherein the alkali metal ion is selected from sodium (Na⁺) and potassium (K⁺) and an organic solvent comprising a pyrrolidone and/or a phosphoric acid ester compound. In a first step a first formation cycle by fully charging the battery cell is carried out, and in a subsequent step the battery cell is discharged and the formation cycle is carried out at a temperature within the range of from >25°C and 100°C. Further cycling steps may be carried out at RT, i.e. at a temperature of from 20 to 25 °C.

Figure 4 schematically illustrates a method for forming a battery cell 1 according to the second aspect of the disclosure and as illustrated in Figure 1. The battery cell comprises a carbon containing anode, a sodium containing cathode and an electrolyte solution comprising an alkali-metal bis(oxalato)borate salt, wherein the alkali metal ion is selected from sodium (Na⁺) and potassium (K⁺) and an organic solvent comprising a pyrrolidone and/or a phosphoric acid ester compound. The method comprises a first step of charging the battery cell at a C-rate within the range of from 0.5C to 20C, and a second step of constant voltage (CV) charging to a voltage above the electrolyte salt decomposition potential for a period of time until a C-rate current range of 0.02C to 4C is reached.

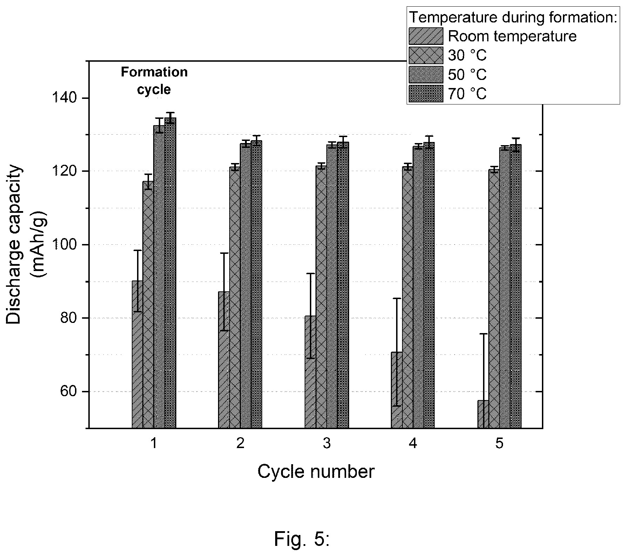

Figure 5 illustrates the results from measurements of the discharge capacity for battery cells having been formed according to the first aspect of the present disclosure. The formation cycling was carried out at temperatures of 30°C, 50°C and 70°C according to the present disclosure and comparative measurements were made when the formation was carried out at room temperature. Three battery cells were formed for each of the respective temperatures, with a total of 12 battery cells, followed by galvanostatic cycling at C/5 at room temperature in cycle 2 to 5. Measurements were carried out for cycle numbers up to five cycles.

The measurements show discharge capacities as a result from a first cycle formation at room temperature, 30°C, 50°C and 70°C at a C-rate of C/5.

As may be seen in Figure 5, the discharge capacity is high over multiple cycles for each of the temperatures, and particularly when the formation cycling was carried out at 50°C and 70°C.

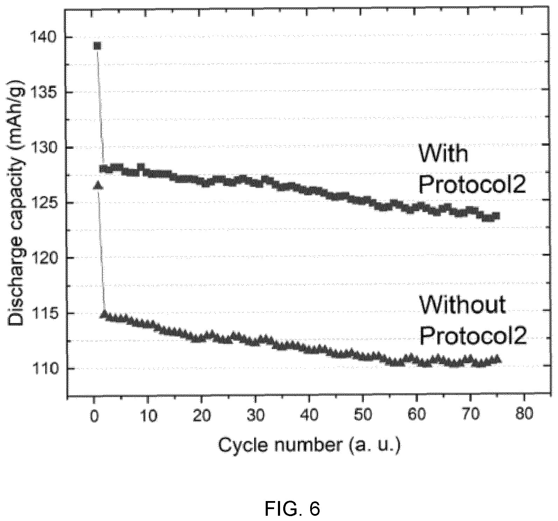

Figure 6 illustrates a comparison made of the discharge capacity for battery cells, according to the present disclosure, subjected to the formation cycle according to the second aspect (Protocol 2) and the discharge capacity for the same type of battery cells which were not subjected to a formation cycle (without Protocol 2), followed by galvanostatic cycling at C/3 in the subsequent cycles for all the battery cells. As illustrated in Figure 6, the discharge capacity for the battery cells subjected to the formation cycle according to the present disclosure was maintained high over time and significantly higher than the discharge capacity for the comparative battery cells.

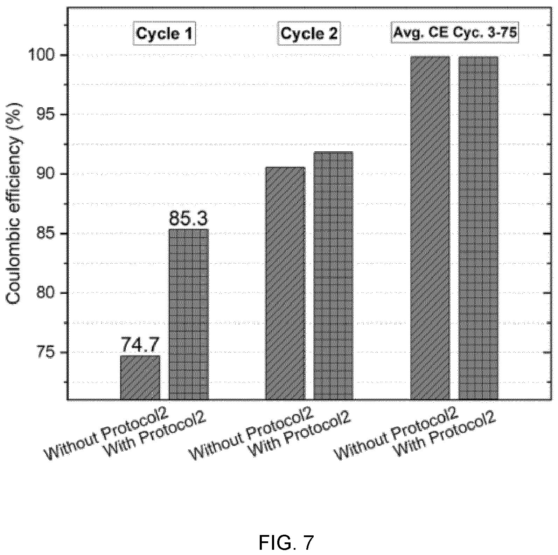

Figure 7 is a bar chart illustrating the Coulombic efficiency measured after forming battery cells according to the present disclose according to the second aspect (Protocol2) compared to the same type of battery cells which were subjected to cycling conditions with constant current galvanostatic cycling (Without Protocol2), i.e. the same as in Cycle 2-75. The measurements were made after the first cycle, the second cycle and up to the seventy fifth cycle. An average of the Coulombic efficiency was measured for the third to the seventy fifth cycles. As may be seen in Figure 7, in the first cycle when forming the battery cells according to the second aspect the Coulombic efficiency is significantly improved.

## Claims

1. A method of forming a battery cell, the battery cell comprising a carbon containing anode, a sodium containing cathode and an electrolyte solution comprising an alkali-metal bis(oxalato)borate salt, wherein the alkali metal ion is selected from sodium (Na⁺) and potassium (K⁺) and an organic solvent comprising a pyrrolidone and/or a phosphoric acid ester compound, wherein the method comprises the steps of;
- performing a first formation cycle by fully charging and discharging the battery cell;
- wherein the formation cycle is carried out at a temperature within the range of from >25°C and 100°C.

2. The method of forming a battery cell according to claim 1, wherein the first formation cycle is carried out at a temperature within the range of from 30°C and 100°C, such as from 30°C 80°C, preferably 45°C and 80°C.

3. A method of forming a battery cell, the battery cell comprising a carbon containing anode, a sodium containing cathode and an electrolyte solution comprising an alkali-metal bis(oxalato)borate salt, wherein the alkali metal ion is selected from sodium (Na⁺) and potassium (K⁺) and an organic solvent comprising a pyrrolidone and/or a phosphoric acid ester compound, wherein the method comprises the steps of,
- performing a first step of charging the battery cell at a C-rate within the range of from 0.5C to 20C; and,
- performing a second step of constant voltage (CV) charging at a voltage above the electrolyte salt decomposition potential for a period of time until a C-rate current range of 0.02C to 4C is reached.

4. The method according to claim 3, wherein the second step is carried out until a C-rate current range of 0.05C to 1C is reached.

5. The method according to claim 3 or 4, wherein the C-rate in the first step is within the range of from 0.5C to 15C.

6. The method of forming a battery cell according to any one of the preceding claims, wherein the concentration of the salt in the electrolyte solution is within the range of from 0.3 M to 1.5 M, preferably within the range of from 0.3 M to 0.8 M.

7. The method of forming a battery cell according to any one of the preceding claims, wherein the cathode material is sodium iron(II)-hexacyanoferrate(II) material.

8. The method of forming a battery cell according to any one of the preceding claims, wherein the anode material is hard carbon.

9. The method of forming a battery cell according to any one of the preceding claims, wherein the sodium iron(II)-hexacyanoferrate(II) material has the formula Na_{2-y}Fe[Fe(CN)₆]·m H₂O, where y < 0.2 and 0 < m < 2.

10. The method of forming a battery cell according to any one of the preceding claims, wherein the organic solvent is N-alkyl-2-pyrrolidone having the following structure: 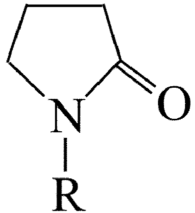 wherein R is selected from an alkyl group comprising 1-8 carbon atoms, preferably 1-4 carbon atoms.

11. The method of forming a battery cell according to any one of the preceding claims, wherein the organic solvent is N-methyl-2-pyrrolidone (NMP).

12. The method of forming a battery cell according to any one of claims 1 to 8, wherein the organic solvent is trialkyl phosphate having the following structure: 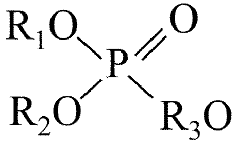 wherein R₁, R₂ and R₃ are independently selected from an alkyl group comprising 1-6 carbon atoms, preferably 1-3 carbon atoms.

13. The method according to any one of claims 1 to 8 or claim 12, wherein the organic solvent is trimethyl phosphate (TMP).

14. The method according to any one of claims 1 to 8, wherein the organic solvent of the electrolyte solution comprises a mixture of N-methyl-2-pyrrolidone (NMP) and trimethyl phosphate.

15. The method according to claim 14, wherein the organic solvent comprises N-methyl-2-pyrrolidone (NMP) and trimethyl phosphate (TMP) in a range of from 40:60 to 90:10.

16. The method according to any one of the preceding claims, wherein the concentration of the salt in the electrolyte solution is from 0.3 to 1.5 M, preferably from 0.4 and 0.8 M, more preferably from 0.5 to 0.6 M.

17. The method according to any one of the preceding claims, wherein the conductivity of the electrolyte solution is above 4 mS/cm at a temperature of 23°C.
